# EUROPÄISCHE PATENTSCHRIFT

(11) **EP 2 030 857 B1**
(45) Veröffentlichungstag und Bekanntmachung des Hinweises auf die Patenterteilung: **12.04.2017**
(21) Anmeldenummer: 08104585.8
(22) Anmeldetag: 30.06.2008
(51) Int. Cl.: B60W 20/00, B60K 6/48, F02D 41/06, F02N 11/04, B60W 10/06, B60W 10/08

(54) **Verfahren zum Starten eines Verbrennungsmotors**
Method for starting a combustion engine
Procédé destiné au démarrage d'un moteur à combustion

(30) Priorität: 29.08.2007 DE 102007040727
(43) Veröffentlichungstag der Anmeldung: 04.03.2009
(73) Patentinhaber: Robert Bosch GmbH, 70442 Stuttgart (DE)
(72) Erfinder: Steuernagel, Frank, 70469 Stuttgart (DE); Falkenstein, Jens-Werner, 73434 Aalen (DE); Vogelgesang, Markus, 74379 Ingersheim (DE); Lang, Martin, 3464 Hausleitel (AT); Kroepke, Karsten, 71636 Ludwigsburg (DE); Muehlbauer, Christian, 85117 Eitensheim (DE)

(56) Entgegenhaltungen:
- DE-A1- 19 814 402
- GB-A- 2 416 861
- US-A1- 2004 144 363

## Beschreibung

Die Erfindung bezieht sich auf ein Verfahren zum Starten eines Verbrennungsmotors mit einer daran gekoppelten E-Maschine (Elektromaschine) in einem Kraftfahrzeug, wobei nach Eingabe eines bestimmten, variabel von einem Fahrer vorgegebenen Wunschdrehmoments an einer Antriebssteuerung des Verbrennungsmotors, der Verbrennungsmotor von der E-Maschine für den Start beschleunigt wird und der Verbrennungsmotor über Aktoren auf definierte Kennwerte zum Starten von der Antriebssteuerung eingestellt wird. Die Erfindung bezieht sich ferner auf ein Computerprogrammprodukt, auf eine Antriebssteuerung zum Starten eines Verbrennungsmotors von einem Fahrzeug sowie auf ein Kraftfahrzeug mit einem Verbrennungsmotor, einer daran gekoppelten E-Maschine und einer Antriebssteuerung.

Es ist bekannt, den Start eines Verbrennungsmotors bei Fahrzeugen so schnell wie möglich auszuführen, um einen Anlasser und eine Fahrzeugbatterie so wenig wie möglich zu belasten. Alle motorspezifischen Aktoren wie Drosselklappe, Einstellventile, Zündzeitpunkt werden dabei über feste Kennwerte angesteuert. Die Motordrehzahl beim Start eines Verbrennungsmotors ist jedoch hinsichtlich der Abgasemissionen nicht optimal.

So ist aus der GB 2 416 861 A1 ein Verfahren und eine Vorrichtung zum Steuern einer Brennstoffeinspritzung bekannt. Diese sehen vor, während eines Startens einer Brennkraftmaschine in einem Hybridfahrzeug die Brennkraftmaschine mit einer elektrischen Maschine anzutreiben, zu bestimmen, ob die Brennkraftmaschine einen Zielzustand erreicht hat und nach Erreichen des Zielzustands Brennstoff in einen Zylinder der Brennkraftmaschine einzubringen. Der Zielzustand zeichnet sich dabei beispielsweise durch einen Druck in einem Lufteinlass aus, welcher kleiner ist als ein bestimmter Wert. Alternativ kann auch die Anzahl an Zylinderevents oder das Verstreichen einer bestimmten Zeitspanne herangezogen werden, um zu bestimmen, ob die Brennkraftmaschine den Zielzustand erreicht hat. Der bestimmte Wert soll während eines Tests des Hybridfahrzeugs festgelegt werden.

Die DE 198 14 402 A1 betrifft ein Antriebssystem für ein Kraftfahrzeug sowie ein Verfahren zum Betreiben derselben. Eine Anfahrphase des Kraftfahrzeugs soll derart ablaufen, dass das Fahrzeug anfangs allein durch die elektrische Maschine beschleunigt wird, währenddessen der Verbrennungsmotor gestartet wird und dieser darauffolgend den Antrieb des Fahrzeugs übernimmt. Dabei soll ein ruckartiges Ankuppeln des Verbrennungsmotors vermieden werden, indem der Verbrennungsmotor, während die elektrische Maschine das Fahrzeug beschleunigt, mitgeschleppt wird oder der Verbrennungsmotor in vom Antrieb entkoppelten Zustand zwecks Starten hochgedreht wird und bei Synchrondrehzahl mit dem Antrieb gekoppelt wird.

Schließlich zeigt die US 2004/0144363 A1 ein Verfahren zum Kontrollieren von Emissionen eines Parallelhybrid-Kraftfahrzeugs, welches sowohl ein elektrisches als auch ein Verbrennungs-Antriebssystem aufweist. Bei einem Start des Verbrennungs-Antriebsystems wird eine Brennstoffzufuhr und eine Verbrennung erst gestartet, nachdem ein Druck in einem Lufteinlass kleiner als ein vorbestimmter Druck ist. Der vorbestimmte Druck ist dabei auf einen festen Wert festgelegt.

Die DE 10 2004 039 838 A1 beschreibt ein Verfahren für einen gestarteten Verbrennungsmotor, gemäß dem ein absoluter Ladedruck in einem Verbrennungsmotor eines Hybridelektrofahrzeugs mit parallelem Elektromotor/Generator emissionreduzierend gesteuert wird, dadurch dass abhängig von Umgebungsparametern ein Drehmoment auf den Verbrennungsmotor und den Elektromotor aufgeteilt wird.

Es ist Aufgabe der Erfindung ein Verfahren, ein Computerprogrammprodukt, eine Antriebssteuerung und ein Kraftfahrzeug der Eingangs genannten Art derart weiter zu bilden, dass die Abgasemissionen beim Starten eines Verbrennungsmotors vom Fahrzeug reduziert sind.

Erfindungsgemäß wird die Aufgabe durch den Gegenstand des Patentanspruchs 1 gelöst. Vorteilhafte Weiterbildungen ergeben sich aus den abhängigen Ansprüchen.

Ein wesentlicher Erfindungsgedanke ist, dass das Kraftfahrzeug mit einer leistungsfähigen E-Maschine (Elektromotor), die eine hohe Drehmomentleistung abgeben kann und das Kraftfahrzeug mit einem leistungsfähigen elektrischen Energiespeicher ausgebildet ist, so dass der Verbrennungsmotor grundsätzlich eine längere Zeit mit einer höheren Drehzahl betrieben werden kann als gegenüber Fahrzeugen gemäß dem Stand der Technik. Der Verbrennungsmotor kann somit in einen längeren, geschleppten Zustand beim Starten gebracht werden, so dass der Verbrennungsmotor sofort beim Start, der durch eine Einspritzung von Kraftstoff bestimmt wird, optimiert niedrig Abgasemissionen mit einem vorteilhaft niedrigen Verbrauch erzeugt. Das Drehmoment ist dabei günstigerweise auf den Bedarfszustand für den Start auf ein variabel vorgebbares Wunschdrehmoment anpassbar, dass in der Regel niedriger ist als bei einem Start des Verbrennungsmotors gemäß dem Stand der Technik. Es werden somit sogenannte Drehzahlüberschwinger vermieden bzw. deutlich reduziert.

Die Aufgabe wird durch ein Verfahren dadurch gelöst, dass der Verbrennungsmotor ohne Einspritzung von Kraftstoff solange von der E-Maschine beschleunigt wird, bis ein vom Verbrennungsmotor umsetzbares Motordrehmoment im Wesentlichen dem Wunschdrehmoment entspricht und dann erst die Einspritzung von Kraftstoff freigegeben wird.
Erst wenn ein bestimmtes Wunschdrehmoment vom Verbrennungsmotor mit definierten Kennwerten des Verbrennungsmotors erreichbar ist, wird also die Einspritzung von Kraftstoff freigegeben. Dann ist ein definiertes Motordrehmoment vom Verbrennungsmotor umsetzbar. Der Verbrennungsmotor wird somit nicht mehr so schnell wie möglich gestartet, sondern erst wenn der Luftansaugdruck im Ansaugrohr so niedrig ist, dass ein eingestelltes Wunschdrehmoment umsetzbar ist. Somit wird erfindungsgemäß der Startzeitpunkt auf einen Abgasemissions-optimalen Zeitpunkt, bevorzugt geringfügig, verzögert.

Bevorzugt wird eine Drosselklappe von mindestens einem Aktor auf ein bestimmtes Luft-Kraftstoffverhältnis für den Start eingestellt. Die Einstellung kann auch von einer Steuerung des Aktors zur schnelleren Erreichung des gewünschten Wunschdrehmoments vor dem Starten beispielsweise abhängig von der Drehzahl variiert werden.

Vorteilhafterweise können die Kennwerte für den Verbrennungsmotor bezüglich des Motordrehmoments von einer Nachschlagetabelle aufgerufen werden. Die Kennwerte sind aus der Nachschlagetabelle niedergelegt. Das Wunschdrehmoment wird aus der Beschleunigung und Intensität der Betätigung des Gaspedals berechnet. Die dafür erforderlichen Kennwerte des Verbrennungsmotors können auch berechnet werden, alternativ oder zusätzlich zu einer Nachschlagetabelle.

Vorteilhafterweise dient die E-Maschine als Sensor, um zu überprüfen, ob das aufzubringende, berechnete oder nachgeschlagene Motordrehmoment vom Verbrennungsmotor umsetzbar ist.

Um den Verbrennungsmotor mit niedrigen Abgasemissionen und ohne Drehzahlüberschwinger zu starten, wird der Luftansaugdruck gemessen. Dadurch werden Luftansaugdruckwerte als definierte Kennwerte erzeugt, mit denen das Wunschdrehmoment umsetzbar ist. Erfindungsgemäß wird also der Verbrennungsmotor erst gestartet, wenn dieser genau das, insbesondere errechnete, Wunschdrehmoment zur Verfügung stellen kann. Der Verbrennungsmotor wird noch nicht gestartet, wenn er ein zu hohes oder außerhalb eines Toleranzbereichs zu niedrigeres Drehmoment zur Verfügung stellt. Der Verbrennungsmotor wird vorzugsweise mit einer Verbrennung eines mageren Luft-Kraftstoffgemisches gestartet.

Um den Zeitpunkt zum Starten des Verbrennungsmotors nach Eingabe eines Wunschmomentes an dem Verbrennungsmotor zu verkürzen, wird der Zündzeitpunkt verstellt, insbesondere wird der Zündzeitpunkt verzögert. Dadurch wird erreicht, dass zu einer bestimmten Stellung einer Drosselklappe ein niedrigeres Drehmoment mit einer geringeren Drehzahl schneller erreicht wird. Ein niedriges Drehmoment ist zumindest beim Start erwünscht, um einen weichen Übergang von E-Maschine zum Verbrennungsmotor zu gewährleisten und Drehzahlüberschwinger zu vermeiden. Außerdem soll bei Hybridfahrzeugen der Momentenübergang vom Antrieb der E-Maschine zum Verbrennungsmotor möglichst gleichmäßig und für die Fahrzeuginsassen unbemerkt erfolgen.

Gemäß einer die Erfindung weiterbildenden Ausführungsform wird die Temperatur des Verbrennungsmotors, insbesondere über die Kühlmitteltemperatur gemessen, besonders bevorzugt wird die Temperatur des Verbrennungsmotors vor dem Start eingestellt. Auch die Temperatur des Verbrennungsmotors beeinflusst das Drehmoment des Verbrennungsmotors, so dass diese Variable in die Berechnung bzw. für das Aufrufen von Kennwerten aus der Nachschlagetabelle berücksichtigt wird. Gemäß einer weiter bevorzugten Ausführungsform wird die Temperatur des Verbrennungsmotors für Kühl- und Wärmekreisläufe so eingestellt, dass der Verbrennungsmotor mit minimierten Abgasemissionen, d.h. reduziertem Verbrauch, gestartet wird.

Gemäß einer weiter bevorzugten Ausführungsform können Gaswechselventile, die Ein- und/oder Auslassventile, an jedem Zylinder des Verbrennungsmotors, zur Erreichung des eingestellten Motormoments zur früheren Erreichung einer Übereinstimmung von Wunschdrehmoment und Motordrehmoment verstellt werden. Die Einstellung der Öffnungs- und Schließzeitpunkte der Gaswechselventile wirkt sich auch auf das Drehmoment des Verbrennungsmotors aus, so dass der Verbrennungsmotor das gewünschte Wunschdrehmoment schneller erreicht. Nach dem Starten des Verbrennungsmotors erfolgt kurzzeitig eine sogenannte fette Verbrennung, um den Katalysator zur katalytischen Verbrennung zu starten.

Gemäß einer ersten Ausführungsform wird der Verbrennungsmotor im Zustand "Stehen" des Fahrzeugs gestartet. Somit kann das erfindungsgemäße Verfahren bei einem Fahrzeug mit einer E-Maschine, der ausschließlich als Anlasser und Generator arbeitet, einfach implementiert werden. Die E-Maschine dient hierbei nicht zur Antriebsunterstützung. Der Verbrennungsmotor, der gemäß dem erfindungsgemäßen Verfahren gestartet wird, hat durch das kurzzeitige, verlängerte, geschleppte Beschleunigen und Starten mit vollständig bekannten Kennwerten zur Umsetzung eines gewünschten, definierten, niedrigen Motordrehmoments vorteilhaft niedrige Abgasemissionen ohne Drehzahlüberschwingungen.

Besonders vorteilhaft kann das Verfahren bei einem elektrischen Hybridfahrzeug eingesetzt werden, wenn der Verbrennungsmotor während einer Fahrt mit Geschwindigkeit gestartet wird. Dies hat den Vorteil, dass das Hybridfahrzeug zum Anfahren einer E-Maschine einsetzt, insbesondere in Bereichen, in denen ein Verbrennungsmotor nicht besonders verbrauchsreduziert arbeitet. Der Verbrennungsmotor wird während der Fahrt erst gestartet, wenn er ein niedriges, gewünschtes Wunschdrehmoment umsetzen kann.
Gemäß einer die Erfindung weiterbildenden Ausführungsform wird ein Drehmoment von der E-Maschine und/oder dem Verbrennungsmotor abhängig von Beschleunigung und nachgefragtem Drehmoment an Antriebsrädern abgegeben, wobei ein Momentenkoordinator der Antriebssteuerung den Einsatz von E-Maschine und/oder Verbrennungsmotor regelt. Erfindungsgemäß arbeitet der Momentenkoordinator mit einem Startkoordinator zusammen, der die Einspritzung von Kraftstoff im Verbrennungsmotor erst freigibt, wenn ein eingestelltes Motordrehmoment vom Verbrennungsmotor umsetzbar ist. Der Verbrennungsmotor wird somit nicht sofort beim Erkennen eines erhöhten Wunschdrehmoments gestartet, sondern zeitlich verzögert, erst wenn das umsetzbare Drehmoment in einem bestimmten Toleranzbereich liegt und insbesondere gleich oder kleiner als das Wunschdrehmoment ist.

Die Aufgabe wird auch durch ein Computerprogrammprodukt gelöst, welches in einen Speicher der Antriebssteuerung ladbar ist, mit Programmbefehlen, um alle Schritte des oben beschriebenen Verfahrens auszuführen, wenn das Programm in der Antriebssteuerung ausgeführt wird.

Die Aufgabe wird also auch durch eine Antriebssteuerung zum Starten eines Verbrennungsmotors von einem Fahrzeug gelöst, die das oben beschriebene Verfahren mittels eines Computerprogramms durchführt.

Ferner wird die Aufgabe durch ein Kraftfahrzeug, einen Verbrennungsmotor und daran angekoppelter E-Maschine sowie eine Antriebssteuerung dadurch gelöst, dass die E-Maschine eine höhere Drehmomentleistung aufweist und ein elektrischer Energiespeicher derart dimensioniert ausgebildet ist, dass das oben beschriebene Verfahren ausführbar ist. Ein herkömmliches Fahrzeug benötigt also einen erfindungsgemäß größeren Energiespeicher, bei dem der Verbrennungsmotor so lange ohne Kraftstoffeinspritzung beschleunigt wird, bis der Verbrennungsmotor die erforderlichen Kennwerte, insbesondere einen vorgesehenen Luftansaugdruck aufweist, um gestartet zu werden.

Es versteht sich, dass die vorstehend genannten und nachstehend noch zu erläuternden Merkmale nicht nur in der jeweils angegebenen Kombination, sondern auch in anderen Kombinationen verwendbar sind.

Die Erfindung wird im Folgenden anhand eines Ausführungsbeispiels unter Bezugnahme auf Zeichnungen näher erläutert. Es zeigen:
- Fig. 1: eine schematische Ansicht eines Schaltplans einer erfindungsgemäßen Steuervorrichtung,
- Fig. 2: ein Diagramm eines zeitlichen Ablaufs bei einem Hybridfahrzeug, das von einer erfindungsgemäßen Steuerungsvorrichtung angesteuert wird, und
- Fig. 3: ein Ablaufdiagramm des erfindungsgemäßen Verfahrens.

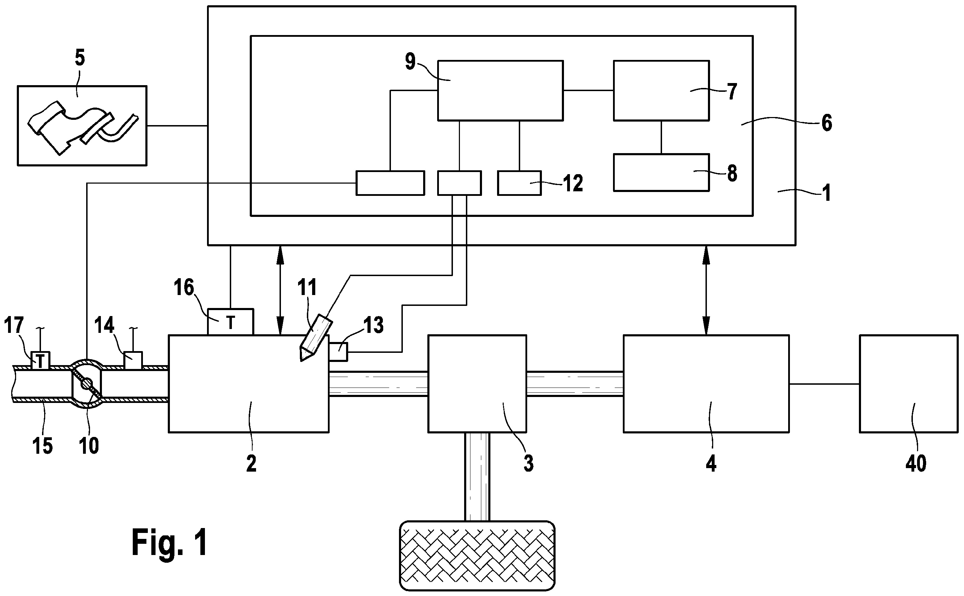

Die Fig. 1 zeigt einen schematischen Schaltplan einer erfindungsgemäßen Antriebssteuerung 1 zum Starten eines Verbrennungsmotors 2, der mit einem Antriebsstrang 3 und mit einer E-Maschine (Elektromotor) 4 gekoppelt ist. Der Schaltplan zeigt den Aufbau eines Hybridfahrzeugs. Die E-Maschine 4 hat mehrere Funktionen, die durch einen oder mehrere Elektromotoren realisiert sind und gegebenenfalls auch nur eine Funktion alleine übernehmen. Grundsätzlich dient die E-Maschine 4 als Anlasser für den Verbrennungsmotor 2, als Generator zur Stromerzeugung für ein Fahrzeug mit einem elektrischen Energiespeicher 40 und als Antriebsmotor zum Antrieb des Fahrzeugs über den Antriebsstrang 3 alleine oder zur Unterstützung des Antriebs mit dem Verbrennungsmotor 2 zusammen.

Ein Hybridkoordinator 6 ist ein Teil der Antriebssteuerung 1 und steuert die E-Maschine 4 und den Verbrennungsmotor 2 aufgrund von Signalen vom Signalgeber 5. Der Signalgeber 5 umfasst Einrichtungen, die vom Fahrer betätigt werden, um einen bestimmten Fahrzustand einzustellen. Die Einrichtungen sind ein Gaspedal, ein Bremspedal und ein Gangwahlgeber, sowie ein Motorstartsignalgeber, der als separater Startknopf oder in einem Zündschloss integriert ist.

Die Antriebssteuerung 1 umfasst mehrere Steuermodule. Zum Starten des Verbrennungsmotors ist ein Startkoordinator 7 vorgesehen.

Der Startkoordinator 7 steht mit einem Momentenkoordinator 8 in Wirkverbindung. Der Momentenkoordinator 8 entscheidet je nach Anforderung welcher Antriebsmotor, der Verbrennungsmotor 2 oder die E-Maschine 4 oder beide gemeinsam, welches Abtriebsdrehmoment bereitstellen, um das angeforderte Drehmoment zu realisieren. Der Startkoordinator 7 ist mit einem Start-Stopp-Modul 9 zum Starten und Stoppen des Verbrennungsmotors 2 gekoppelt. Mit dem Start-Stopp-Modul wird ein Aktor 10 zur Drosselklappeneinstellung, ein Aktor 11 für die Einspritzung, d.h. Einspritzventil und Einspritzpumpe, eine Zündwinkelsteuerung 12 und eine Einrichtung 13 zum Öffnen und Schließen von Gaswechselventilen angesteuert.

Der Verbrennungsmotor 2 umfasst mindestens einen Drucksensor 14, um den Ladedruck im Ansaugrohr 15 zu messen, um daraus mit der Antriebssteuerung 1 auszuwerten, ob das geforderte Wunschdrehmoment von dem Verbrennungsmotor 2 als Motordrehmoment umsetzbar ist. Erfindungsgemäß weist der Startkoordinator 7 eine Moduleinrichtung auf, die ein Startsignal an das Start/Stop-Modul zum Starten des Verbrennungsmotors freigibt, wenn das Wunschdrehmoment dem umsetzbaren Motordrehmoment im Wesentlichen entspricht.

Zur Verfeinerung der Antriebssteuerung 1, insbesondere des Startkoordinators 7, können die Temperatur T des Verbrennungsmotors 2 und der angesaugten Frischluft, mittels Temperatursensoren 16, 17 berücksichtigt werden.

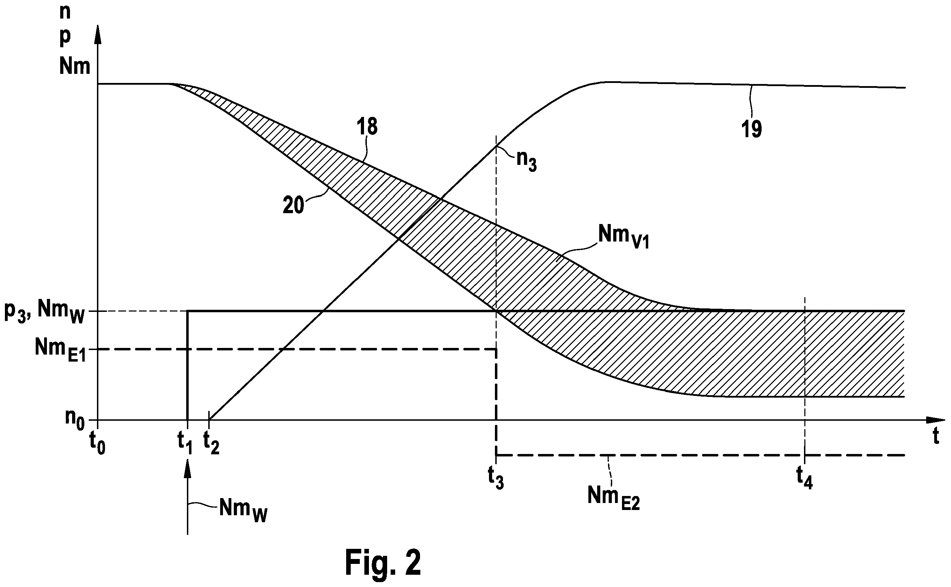

Die Fig. 2 zeigt ein Diagramm mit einem zeitlichen Ablauf eines Starts eines Verbrennungsmotors 2 in einem Hybridfahrzeug. Auf der Abszisse ist die Zeit t dargestellt und auf der Ordinate sind die Drehzahl n, der Luftdruck p im Ansaugrohr 15 des Verbrennungsmotors 2 und das Drehmoment Nm aufgetragen. Die Fig. 2 zeigt den zeitlichen Ablauf bei einem Fahrzeug mit einem parallelen Hybridantrieb. Der Hybridantrieb weist beispielsweise den in der Fig. 1 dargestellten Schaltplan auf. Zum Zeitpunkt t₀ ist der Verbrennungsmotor 2 ausgeschaltet und das Fahrzeug wird mit der E-Maschine 4 ausschließlich angetrieben bzw. steht still. Die E-Maschine 4 gibt dabei ein Drehmoment Nm_{E1} ab. Zum Zeitpunkt t₁ fordert der Fahrer vom Fahrzeug ein größeres Drehmoment beispielsweise ein Wunschdrehmoment Nm_{w}. Hierfür gibt der Fahrer an den Signalgeber 5 über das Gaspedal den Wunsch nach einem höheren Drehmoment an die Antriebssteuerung 1 weiter.

Im Zeitpunkt t₁ wird zur Drosselklappeneinstellung ein Zielmoment mit der Momentenkennlinie 18 eingestellt, so das ein Luftpfad eingezeichnet ist, der den Ansaugdruck im Ansaugrohr 15 in zeitlicher Hinsicht indirekt proportional zur Beschleunigung einer geschleppten Drehzahl n des Verbrennungsmotors 2 darstellt. Erfindungsgemäß wird der Verbrennungsmotor 2 nicht sofort gestartet. Der Verbrennungsmotor 2 wird von der E-Maschine 4 vom Stillstand mit einer Drehzahl n₀ auf eine Drehzahl n entsprechend der Drehzahlkennlinie 19 beschleunigt.

Beim Beschleunigen des Verbrennungsmotors 2 ohne Einspritzung mittels des Aktors 11 wird der Luftdruck im Verbrennungsmotor 2, der anfänglich gleich dem Umgebungsdruck von ca. 1 bar ist, entsprechend der Momentenkennlinie 18 reduziert, bis das vom Verbrennungsmotor 2 umsetzbare Motordrehmoment im Wesentlichen dem vom Fahrer angeforderte Wunschmoment entspricht. Das Wunschdrehmoment Nm_{W} ist niedriger als bei einem Start des Verbrennungsmotors mit einem hohen Ladeansaugdruck. Ein Motordrehmoment Nm_{V1} im Bereich des Wunschdrehmoments Nm_{W} hat einen geringeren Verbrauch und somit niedrigere Emissionen. Es treten dabei auch keine Drehzahlüberschwinger auf, die als störend von den Fahrzeuginsassen empfunden werden können.

Um die vom Ansaugdruck abhängige Momentenkennlinie 18 des Verbrennungsmotors 2 zeitlich nach vorne zu verschieben, kann der Zündwinkel über die Zündwinkelsteuerung 12 verstellt werden, so dass vom Verbrennungsmotor 2 zeitlich früher, beispielsweise im Zeitpunkt t₂ bereits das gewünschte umsetzbare Motordrehmoment Nm_{V1} mit verbrauchsoptimierten Emissionen erreicht wird. Der Zündwinkel wird zu einer Spätverstellung zurückverstellt und erzeugt eine Verringerung des Motordrehmoments. Die zeitliche nach vorne verschobene Momentenkennlinie 20 stellt einen sogenannten Zündungspfad dar.

Zum Zeitpunkt t₃ entspricht das Wunschdrehmoment Nm_{W} dem vom Verbrennungsmotor 2 umsetzbaren Motordrehmoment Nm_{V1} mit einer Drehzahl n₃ und einem Ansaugdruck p₃, so dass die Zündung durch eine Einspritzung von Kraftstoff mittels des Aktors 11 durch Übermittlung eines Signals vom Startkoordinator 7 zum Start/Stop-Modul 9 jetzt freigegeben wird, so dass der Verbrennungsmotor startet.

Das Abtriebsdrehmoment wird vom Momentenkoordinator 8 anschließend koordiniert, so dass der Antriebsstrang 3 nur noch vom Verbrennungsmotor 2 angetrieben wird. Die E-Maschine 4 wird im Zeitpunkt t₃ von einem Betrieb als Antriebsmotor zu einem Betrieb als Generator (Rekuperationsbetrieb) umgeschaltet. Die E-Maschine 4 nimmt ab dem Zeitpunkt t₃ ein Drehmoment auf und ist deshalb im Diagramm mit einem negativen Drehmoment -Nm_{E2} dargestellt.

Im Zeitpunkt t₄ erreicht die Momentenkennlinie 16 auch das Wunschmoment Nmᵥ₁. Der Verbrennungsmotor 2 kann zwischen den Zeitpunkten t₃ und t₄ gezündet werden. Um so näher der Zündzeitpunkt des Verbrennungsmotors 2 am Zeitpunkt t₃ liegt, desto mehr wird der elektrische Energiespeicher 40, beispielsweise eine Hochleistungsbatterie oder ein Hochleistungskondensator entlastet, wobei gleichzeitig der Verbrennungsmotor 2 in einem vorteilhaft niedrigeren Abgasemissions-Grenzwertbereich gestartet und weiter betrieben wird.

Außerdem sind im Zündzeitpunkt t₃ weitere Parameter, wie beispielsweise die Temperatur T des Verbrennungsmotors und der Frischluft sowie die Kolbenstellung in den Zylindern für den Betrieb des Verbrennungsmotors 2 bekannt, so dass der Verbrennungsmotor 2 mit optimiert niedrigen Emissionswerten gestartet wird. Das zeitliche Ablaufdiagramm ist genauso auf ein herkömmliches Fahrzeug mit einem leistungsfähigen Anlasser als E-Maschine 4 und mit einem leistungsfähigen elektrischen Energiespeicher 40 übertragbar.

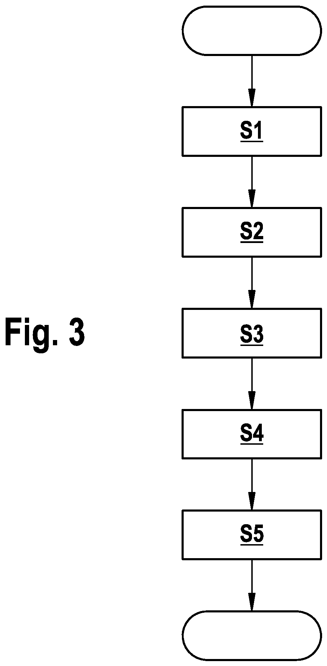

Die Fig. 3 zeigt ein Ablaufdiagramm gemäß einem erfindungsgemäßen Verfahren zum Starten eines Verbrennungsmotors 2, das in einer erfindungsgemäßen Antriebssteuerung 1 mittels eines Computerprogrammprodukts vorzugsweise in einem Vollhybrid-Fahrzeug implementiert und integriert ist. Vollhybrid-Fahrzeug heißt, dass das Fahrzeug zum Antrieb mindestens eine E-Maschine alleine und als Antriebsunterstützung für den Verbrennungsmotor einsetzt. Das Steuerungsverfahren ist aber auch für Fahrzeuge mit einem so genannten Mikro- oder Mildhybridantrieb einsetzbar. Mikrohybrid heißt, dass der Verbrennungsmotor ein Start/Stopp-Modul in der Antriebssteuerung aufweist, das den Verbrennungsmotor automatisch startet und stoppt. Außerdem wird die E-Maschine als Generator zum Bremsen eingesetzt. Mildhybrid heißt, dass die E-Maschine zur Antriebsunterstützung vom Momentenkoordinator eingesetzt wird.

Im Zeitpunkt t₀ wird der Ablauf bei START begonnen. Zu einem Zeitpunkt t₁ kommt vom Beschleunigungspedal, dem Signalgeber 5, eine Nachfrage nach einem höheren Wunschdrehmoment Nm_{w}, das die zum Zeitpunkt t₀ arbeitende E-Maschine 4 nicht mehr liefern kann, so dass der Verbrennungsmotor 2 gestartet werden muss. Die Entscheidung, ob die E-Maschine 4 alleine, der Verbrennungsmotor 2 alleine oder beide gemeinsam zum Antrieb eingesetzt werden, trifft als Untermodul der Antriebssteuerung 1 und des Hybridkoordinators 6 der Momentenkoordinator 8. Der Momentenkoordinator 8 gibt dann ein Signal an den Startkoordinator 7, der zum Beschleunigungssignal das erforderliche Wunschdrehmoment Nm_{V1} im Schritt S1 berechnet.

Zum Zeitpunkt t₂ wird im Schritt S2 der Verbrennungsmotor 2 über eine Kupplung mit der E-Maschine 4 gekoppelt und mit einer Drehzahl von n₀ bis n proportional zur Zeit t beschleunigt.

Dabei werden im Schritt S3 von der Antriebssteuerung 1 Motorkennwerte des Verbrennungsmotors 2, wie die Einstellung der Drosselklappe auf ein bestimmtes Luft-Kraftstoffgemischverhältnis und eine späte Zündung beim Zündwinkel mit Aktoren 10, 12 eingestellt. Der zu Drehzahl n indirekt proportionale Luftansaugdruck p wird mittels eines Sensors 14 überwacht. Der Luftansaugdruck p bestimmt erfindungsgemäß den Startzeitpunkt des Verbrennungsmotors 2, da der Luftansaugdruck p zum umsetzbaren Motordrehmoment Nm_{V1} proportional verläuft.

Im Schritt S4 stellt die Antriebssteuerung 1 fest, dass ein Wunschdrehmoment Nm_{W} dem vom Verbrennungsmotor 2 umsetzbaren Motordrehmoment Nm_{V1} entspricht bzw. niedriger aber nicht höher ist, so dass der Startkoordinator 7 den Aktor 10 zur Einspritzung von Kraftstoff in den Verbrennungsmotor 2 freigibt und Kraftstoff eingespritzt wird, und der Verbrennungsmotor 2 gestartet wird. In der Antriebssteuerung 1 geht eine Ablaufsteuerung des Hybridkoordinators 6 vom Startkoordinator 7 zum Momentenkoordinator 8 zurück.

Im Schritt S5 wird das Wunschdrehmoment Nmᵥ₁ vom Verbrennungsmotor 2 geleistet, der Momentenkoordinator 8 schaltet die E-Maschine 4 in den Generatorbetrieb um, so dass ein negatives Drehmoment -Nm_{E2} von der E-Maschine 4 vom Motordrehmoment des Verbrennungsmotors 2 abgezogen wird. Der Ablauf des Verfahrens ist somit am ENDE.

Der Verbrennungsmotor kann durch eine Zündwinkelspätverstellung deutlich früher gestartet werden. Die Abgasemissionen sind reduziert, da der Verbrennungsmotor in einem Bereich mit reduziertem Kraftstoffverbrauch gestartet wird. Alle Figuren zeigen lediglich schematische nicht maßstabsgerechte Darstellungen. Im Übrigen wird insbesondere auf die zeichnerischen Darstellungen für die Erfindung als wesentlich verwiesen.

## Patentansprüche

1. Verfahren zum Starten eines Verbrennungsmotors (2) mit einer daran gekoppelten E-Maschine (Elektromaschine) (4) in einem Kraftfahrzeug, wobei nach Eingabe eines bestimmten, variabel von einem Fahrer vorgegebenen Wunschdrehmoments (Nm_{W}) an einer Antriebssteuerung (1) des Verbrennungsmotors (2), der Verbrennungsmotor (2) von der E-Maschine (4) für den Start beschleunigt wird und der Verbrennungsmotor (2) über Aktoren auf definierte Kennwerte zum Starten von der Antriebssteuerung (1) eingestellt wird, wobei der Verbrennungsmotor (2) ohne Einspritzung von Kraftstoff solange von der E-Maschine (4) beschleunigt wird, bis ein vom Verbrennungsmotor (2) umsetzbares Motordrehmoment (Nm_{V1}) im Wesentlichen dem Wunschdrehmoment (Nm_{W}) entspricht und dann erst die Einspritzung von Kraftstoff freigegeben wird.

2. Verfahren nach Anspruch 1, **dadurch gekennzeichnet, dass** eine Drosselklappe von mindestens einem Aktor (10) auf ein bestimmtes Luft-Kraftstoffverhältnis für den Start eingestellt wird.

3. Verfahren nach Anspruch 1 oder 2, **dadurch gekennzeichnet, dass** der Luftansaugdruck (p) gemessen wird, um Luftansaugdruckwerte als definierte Kennwerte zu erzeugen, mit denen das Wunschdrehmoment (Nm_{W}) umsetzbar ist, wobei bevorzugt die Kennwerte aus einer Nachschlagetabelle aufgerufen und/oder berechnet werden.

4. Verfahren nach einem oder mehreren der Ansprüche 1 bis 3, **dadurch gekennzeichnet, dass** der Zündzeitpunkt verstellt, insbesondere verzögert, wird.

5. Verfahren nach einem oder mehreren der Ansprüche 1 bis 4, **dadurch gekennzeichnet, dass** die Temperatur (T), insbesondere des Verbrennungsmotors (2), bevorzugt über die Kühlmitteltemperatur und/oder die Lufttemperatur, gemessen wird und besonders bevorzugt die Temperatur (T) des Verbrennungsmotors vor dem Start eingestellt wird.

6. Verfahren nach einem oder mehreren der Ansprüche 1 bis 5, **dadurch gekennzeichnet, dass** Gaswechselventile, die Ein- und/oder Auslassventile an jedem Zylinder des Verbrennungsmotors (2), zur früheren Erreichung des eingestellten Motordrehmoments verstellt werden.

7. Verfahren nach einem oder mehreren der Ansprüche 1 bis 6, **dadurch gekennzeichnet, dass** der Verbrennungsmotor (2) beim Stehen des Fahrzeugs gestartet wird und der Verbrennungsmotor (2) in einem elektrischen Hybridfahrzeug während einer Fahrt mit Geschwindigkeit gestartet wird und insbesondere ein Drehmoment von der E-Maschine (4) und/oder dem Verbrennungsmotor (2) abhängig von Beschleunigung und nachgefragtem Drehmoment an Abtriebsräder abgegeben wird, wobei ein Momentenkoordinator (7) der Antriebssteuerung (1) den Einsatz von E-Maschine (4) und/oder Verbrennungsmotor (2) regelt.

8. Computerprogrammprodukt, welches in einen Speicher (12) der Antriebssteuerung ladbar ist, mit Programmbefehlen, um alle Schritte eines Verfahrens nach zumindest einem der Ansprüche 1 bis 7 auszuführen, wenn das Programm in der Antriebssteuerung (1) ausgeführt wird.

9. Antriebssteuerung (1) eines Fahrzeugs, die das Verfahren gemäß einem oder mehreren der Ansprüche 1 bis 7 mittels eines Computerprogrammprodukts gemäß Anspruch 8 ausführt.

10. Kraftfahrzeug mit einem Verbrennungsmotor (2), einer daran gekoppelten E-Maschine (4) und einer Antriebssteuerung (1) nach Anspruch 9, **dadurch gekennzeichnet, dass** die E-Maschine (4) mit einer hohen Drehmomentleistung und ein leistungsfähiger elektrischer Energiespeicher (40) vorgesehen sind, sodass das Verfahren nach einem oder mehreren der Ansprüche 1 bis 7 ausführbar ist.

## Claims

1. Method for starting an internal combustion engine (2) having an electric machine (4) which is coupled thereto in a motor vehicle, wherein after the inputting of a specific desired torque (Nmw), variably predefined by a driver, at a drive controller (1) of the internal combustion engine (2), the internal combustion engine (2) is accelerated by the electric machine (4) for the start, and the internal combustion engine (2) is set, by means of actuators, to defined characteristic values for starting the drive controller (1), wherein the internal combustion engine (2) is accelerated by the electric machine (4), without injection of fuel, up to an engine torque (Nmᵥ₁) which can be implemented by the internal combustion engine (2) and corresponds essentially to the desired torque (Nmw) and only then releases the injection of fuel.

2. Method according to Claim 1, **characterized in that** a throttle valve is set by at least one actuator (10) to a specific air/fuel ratio for the start.

3. Method according to Claim 1 or 2, **characterized in that** the air intake pressure (p) is measured in order to generate air intake pressure values as defined characteristic values with which the desired torque (Nm_{W}) can be implemented, wherein the characteristic values are preferably retrieved from a lookup table and/or calculated.

4. Method according to one or more of Claims 1 to 3, **characterized in that** the ignition time is adjusted, in particular delayed.

5. Method according to one or more of Claims 1 to 4, **characterized in that** the temperature (T), in particular of the internal combustion engine (2), is preferably measured by means of the coolant temperature and/or the air temperature, and particularly preferably the temperature (T) of the internal combustion engine is set before the start.

6. Method according to one or more of Claims 1 to 5, **characterized in that** gas exchange valves, the inlet valves and/or outlet valves on each cylinder of the internal combustion engine (2), are adjusted to reach the set engine torque earlier.

7. Method according to one or more of Claims 1 to 6, **characterized in that** the internal combustion engine (2) is started when the vehicle is stationary, and the internal combustion engine (2) is started in an electric hybrid vehicle during travel at speed, and in particular a torque is output by the electric machine (4) and/or the internal combustion engine (2) as a function of the acceleration and requested torque at output gears, wherein a torque coordinator (7) of the drive controller (1) regulates the use of the electric machine (4) and/or internal combustion engine (2).

8. Computer program product which can be loaded into a memory (12) of the drive controller, with program orders in order to carry out all the steps of a method according to at least one of Claims 1 to 7 when the program is run in the drive controller (1).

9. Drive controller (1) of a vehicle which carries out the method according to one or more of Claims 1 to 7 by means of a computer program product according to Claim 8.

10. Motor vehicle having an internal combustion engine (2), an electric machine (4) coupled thereto and a drive controller (1) according to Claim 9, **characterized in that** the electric machine (4) is provided with a high torque power and a powerful electrical energy store (40), with the result that the method according to one or more of Claims 1 to 7 can be carried out.

## Revendications

1. Procédé de démarrage d'un moteur à combustion interne (2) comprenant un moteur électrique (machine électrique) (4) couplé à celui-ci dans un véhicule automobile, dans lequel, après fourniture en entrée d'un couple de rotation souhaité prédéfini (Nm_{w}) déterminé de manière variable par un conducteur à une unité de commande (1) du moteur à combustion interne (2), le moteur à combustion interne (2) est accéléré pour son démarrage par le moteur électrique (4) et le moteur à combustion interne (2) est réglé par l'intermédiaire d'actionneurs à une valeur caractéristique définie par l'unité de commande d'entraînement (1) pour le démarrage, dans lequel le moteur à combustion interne (2) est accéléré par le moteur électrique (4) sans injection de carburant jusqu'à ce qu'un couple de rotation de moteur (Nmᵥ₁) réalisable par le moteur à combustion interne (2) corresponde sensiblement au couple de rotation souhaité (Nm_{w}), l'injection de carburant n'étant déclenchée qu'ensuite.

2. Procédé selon la revendication 1, **caractérisé en ce qu'**un papillon des gaz est ajusté par au moins un actionneur (10) à un rapport air-carburant déterminé pour le démarrage.

3. Procédé selon la revendication 1 ou 2, **caractérisé en ce que** la pression d'admission d'air (p) est mesurée afin de générer des valeurs de pression d'admission d'air en tant que valeurs caractéristiques définies avec lesquelles le couple de rotation souhaité (Nm_{w}) peut être produit, dans lequel les valeurs caractéristiques sont de préférence obtenues à partir d'une table de consultation et/ou calculées.

4. Procédé selon l'une ou plusieurs des revendications 1 à 3, **caractérisé en ce que** l'instant d'allumage est réglé, notamment retardé.

5. Procédé selon l'une ou plusieurs des revendications 1 à 4, **caractérisé en ce que** la température (T), notamment du moteur à combustion interne (2), est de préférence mesurée par l'intermédiaire de la température du fluide réfrigérant et/ou de la température de l'air, et **en ce que** la température (T) du moteur à combustion interne est notamment de préférence réglée avant le démarrage.

6. Procédé selon l'une ou plusieurs des revendications 1 à 5, **caractérisé en ce que** des soupapes d'échange de gaz, à savoir les soupapes d'admission et/ou d'échappement, sont ajustées sur le cylindre du moteur à combustion interne (2) pour atteindre de manière anticipée le couple de rotation de moteur réglé.

7. Procédé selon l'une ou plusieurs des revendications 1 à 6, **caractérisé en ce que** le moteur à combustion interne (2) est démarré lorsque le véhicule automobile est à l'arrêt et **en ce que** le moteur à combustion interne (2) est démarré dans un véhicule hybride électrique pendant un déplacement à une certaine vitesse et **en ce qu'**un couple de rotation est notamment délivré par le moteur électrique (4) et/ou le moteur à combustion interne (2) en fonction de l'accélération et du couple de rotation demandé à des roues motrices, dans lequel un coordinateur de couple (7) de l'unité de commande d' entrainement (1) régule la mise en oeuvre du moteur électrique (4) et/ou du moteur à combustion interne (2).

8. Produit de programme d'ordinateur pouvant être chargé dans une mémoire (12) de l'unité de commande d'entraînement, comportant des instructions de programme destinées à mettre en oeuvre toutes les étapes d'un procédé selon au moins l'une des revendications 1 à 7 lorsque le programme est exécuté dans l'unité de commande d'entraînement (1).

9. Unité de commande d'entraînement (1) d'un véhicule mettant en oeuvre le procédé selon l'une ou plusieurs des revendications 1 à 7 au moyen d'un produit de programme d'ordinateur selon la revendication 8.

10. Véhicule automobile comportant un moteur à combustion interne (2), un moteur électrique (4) couplé à celui-ci et une unité de commande d'entraînement (1) selon la revendication 9, **caractérisé en ce que** le moteur électrique (4) est doté d'une puissance de couple de rotation élevée et d'un accumulateur d'énergie électrique (40) puissant de manière à pouvoir mettre en oeuvre le procédé selon l'une ou plusieurs des revendications 1 à 7.
